# EUROPÄISCHE PATENTSCHRIFT

(11) **EP 3 337 697 B1**
(45) Veröffentlichungstag und Bekanntmachung des Hinweises auf die Patenterteilung: **11.03.2020**
(21) Anmeldenummer: 16745131.9
(22) Anmeldetag: 01.08.2016
(51) Int. Cl.: B60S 1/24, B60S 1/34

(54) **ANTRIEBSEINRICHTUNG FÜR EINE SCHEIBENWISCHVORRICHTUNG**
DRIVE DEVICE FOR A WINDSCREEN WIPING DEVICE
DISPOSITIF D'ENTRAÎNEMENT POUR UN ENSEMBLE ESSUIE-GLACE

(30) Priorität: 20.08.2015 DE 102015215956
(43) Veröffentlichungstag der Anmeldung: 27.06.2018
(73) Patentinhaber: Robert Bosch GmbH, 70442 Stuttgart (DE)
(72) Erfinder: KLEIN, Juergen, 76275 Ettlingen (DE); WEILER, Michael, 77815 Buehl (DE); DUDEK, Alexander, 77656 Offenburg (DE); LIND, Eugen, 77871 Renchen-Erlach (DE); METZ, Ulrich, 77855 Achern (DE)
(86) Internationale Anmeldenummer: PCT/EP2016/068309
(87) Internationale Veröffentlichungsnummer: WO 2017/029106

(56) Entgegenhaltungen:
- DE-A1- 10 261 926
- FR-A1- 2 774 340
- JP-A- S6 088 663

## Beschreibung

Die Erfindung bezieht sich auf eine Antriebseinrichtung für eine Scheibenwischvorrichtung nach dem Oberbegriff des Anspruches 1.

### Stand der Technik

In der DE 102 61 926 A1 wird eine Antriebseinrichtung für eine Scheibenwischvorrichtung in einem Kraftfahrzeug beschrieben, die eine Antriebseinheit mit einem elektrischen Antriebsmotor und einem nachgeschalteten Getriebe umfasst, in welchem die Rotationsbewegung des Antriebsmotors in eine Drehpendelbewegung einer Abtriebswelle umgesetzt wird. Die Abtriebswelle ist Träger eines ersten Wischarmes, der auf der zu reinigenden Fahrzeugscheibe aufliegt. Außerdem treibt die Abtriebswelle ein Übertragungsgestänge an, über das eine weitere Welle in eine Drehpendelbewegung versetzt wird, welche Träger eines zweiten, auf der Fahrzeugscheibe aufliegenden Wischarmes ist. Diese Ausführung hat den Vorteil, dass lediglich eine Antriebseinheit mit einem elektrischen Antriebsmotor für den Antrieb von zwei Wischarmen erforderlich ist.

### Offenbarung der Erfindung

Der Erfindung liegt die Aufgabe zugrunde, eine Antriebseinrichtung für eine Scheibenwischvorrichtung, die einen elektrischen Antriebsmotor und ein Getriebe, einen ersten Wischarm sowie ein Übertragungsgestänge mit einem zweiten Wischarm umfasst, mit einfachen konstruktiven Maßnahmen so auszuführen, dass beide Wischarme über einen langen Betriebszeitraum zuverlässig betätigt werden können.

Diese Aufgabe wird erfindungsgemäß mit den Merkmalen des Anspruches 1 gelöst. Die Unteransprüche geben zweckmäßige Weiterbildungen an.

Die erfindungsgemäße Antriebseinrichtung wird für eine Scheibenwischvorrichtung in einem Fahrzeug eingesetzt, beispielsweise für einen Frontscheibenwischer zum Reinigen der Frontscheibe, und umfasst eine Antriebseinheit mit einem elektrischen Antriebsmotor und einem nachgeschalteten Getriebe, über das die Rotationsbewegung des Antriebsmotors in eine Drehpendelbewegung einer Abtriebswelle umgesetzt wird. Die Abtriebswelle ist Träger eines ersten Wischarmes, dessen Wischblatt auf der zu reinigenden Fahrzeugscheibe aufliegt. An der Abtriebswelle greift außerdem ein Bauteil eines Übertragungsgestänges an, über das eine weitere Welle in eine Drehpendelbewegung versetzt wird, wobei die weitere Welle Träger eines zweiten Wischarmes mit einem auf der Fahrzeugscheibe aufliegenden Wischblatt ist. Die Abtriebswelle, welche unmittelbar über das Getriebe von dem Antriebsmotor angetrieben wird, treibt somit über das Übertragungsgestänge die zweite Welle mit dem zweiten Wischarm an.

Der erste Wischarm ist über eine erste Verbindungsstelle mit der Abtriebswelle drehfest gekoppelt. An einer zweiten, axial beabstandeten Verbindungsstelle greift ein Bauteil des Übertragungsgestänges an der Abtriebswelle an und ist ebenfalls drehfest mit der Abtriebswelle gekoppelt. Dieses Bauteil, beispielsweise eine Kurbel, führt dementsprechend die gleiche Drehpendelbewegung wie die Abtriebswelle aus, die über weitere Bauteile des Übertragungsgestänges in die gewünschte Drehpendelbewegung der zweiten, den zweiten Wischarm tragenden Welle umgesetzt wird. Der zweite Wischarm kann hierbei entweder eine gleichgerichtete Wischbewegung wie der erste Wischarm oder eine entgegengesetzt gerichtete Wischbewegung ausführen.

Die erste und die zweite Verbindungsstelle an der Abtriebswelle sind prinzipiell gleich aufgebaut und gewährleisten jeweils eine drehfeste Kopplung des ersten Wischarms bzw. des Bauteils des Übertragungsgestänges mit der Abtriebswelle. Diese Kopplung wird über einen Verbindungsabschnitt pro Verbindungsstelle auf der Abtriebswelle gewährleistet, auf dem eine Nabe des ersten Wischarms bzw. des Bauteils des Übertragungsgestänges kraft- oder formschlüssig aufsitzt. Bei der Montage wird beispielsweise zuerst das Bauteil des Übertragungsgestänges mit einer nabenförmigen Ausnehmung auf die Abtriebswelle axial bis zum Erreichen des zugeordneten Verbindungsabschnittes aufgesteckt, anschließend erfolgt das Aufsetzen des Wischarms mit einer nabenförmigen Ausnehmung auf den zugeordneten Verbindungsabschnitt auf der Abtriebswelle.

Mit dem Aufsetzen des Bauteils des Übertragungsgestänges bzw. des Wischarms auf den jeweils zugeordneten Verbindungsabschnitt erfolgt die kraft- oder formschlüssige Verbindung, die beispielsweise dadurch erreicht wird, dass der betreffende Verbindungsabschnitt auf der Abtriebswelle eine aufgeraute oder unregelmäßige Oberfläche aufweist. Die Nabe des Bauteils des Übertragungsgestänges bzw. des Wischarms kann auf die Verbindungsstelle nach Art einer Presspassung axial aufgeschoben werden, wodurch in Umfangs- bzw. Drehrichtung die gewünschte drehfeste Kopplung erreicht wird. Diese kann entweder durch eine kraftschlüssige und/oder eine formschlüssige Verbindung zwischen den Verbindungspartnern erfolgen.

Die Verbindungsstellen an der Abtriebswelle sind vorzugsweise auf die gleiche Art aufgebaut, wodurch eine Vereinheitlichung und Standardisierung der Verbindungen erreicht wird. Es kann zum Beispiel zweckmäßig sein, die Verbindungsabschnitte auf der Abtriebswelle jeweils als Rändelabschnitt mit einer gerändelten Oberfläche auszubilden. Der Rändelabschnitt weist beispielsweise eine Riffelung parallel zur Längsachse der Abtriebswelle auf, was die drehfeste Kopplung mit dem ersten Wischarm bzw. dem Bauteil des Übertragungsgestänges unterstützt. Es sind aber auch sonstige Riffelmuster möglich, beispielsweise eine kreuzweise Riffelung. Die nabenförmige Ausnehmung im Wischarm bzw. dem Bauteil des Übertragungsgestänges kann ebenfalls mit einer Riffelung oder Rändelung versehen sein, um das Herstellen einer drehfesten Kopplung zu unterstützen.

Bei einer kraftschlüssigen Verbindung im Bereich der beiden Verbindungsstellen sind die Oberflächen an der Mantelfläche der Abtriebswelle im Bereich des Verbindungsabschnittes sowie an der Innenseite der nabenförmigen Ausnehmung am Wischarm bzw. dem Bauteil des Übertragungsgestänges vorteilhafterweise rotationssymmetrisch ausgebildet. Es kommt aber auch eine formschlüssige Verbindung in Betracht, bei der die jeweiligen Oberflächen nicht-rotationssymmetrisch ausgeführt sind, beispielsweise als Vieleck. Des Weiteren ist eine Kombination von kraft- und formschlüssiger Verbindung möglich, indem die Oberflächen nicht-rotationssymmetrisch ausgeführt sind und zugleich eine aufgeraute Oberfläche in Form einer Riffelung oder Rändelung besitzen.

Die Verbindungsabschnitte können beispielsweise konusförmig oder zylindrisch ausgebildet sein. Hierbei ist es sowohl möglich, dass beide Verbindungsabschnitte auf der Abtriebswelle konisch als auch beide Verbindungsabschnitte zylindrisch ausgebildet sind. In Betracht kommt außerdem eine Ausführung mit einem konischen Verbindungsabschnitt und einem zylindrischen Verbindungsabschnitt, beispielsweise eine konische Ausführung für die Kopplung zwischen der Abtriebswelle und dem ersten Wischarm benachbart zur Stirnseite der Abtriebswelle und eine zylindrische Ausführung für die Kopplung zwischen der Abtriebswelle und dem Bauteil des Übertragungsgestänges.

Gemäß einer weiteren vorteilhaften Ausführung weist die Abtriebswelle auf ihren beiden Abschnitten, welche den Verbindungsabschnitt axial zum Übertragungsgestänge begrenzen, einen unterschiedlichen Durchmesser auf. Diese Abtriebswellenabschnitte sind jeweils zylindrisch ausgebildet. Das Bauteil des Übertragungsgestänges, welche mittels seiner nabenförmigen Ausnehmung auf die Abtriebswelle bis zum Erreichen des zugeordneten Verbindungsabschnittes aufgeschoben wird, wird bevorzugt über den Abtriebswellenabschnitt mit kleinerem Durchmesser aufgesetzt, wobei der gegenüberliegende Abtriebswellenabschnitt mit größerem Durchmesser einen Anschlag zur Begrenzung des axialen Aufschiebens bildet.

Es kann des Weiteren vorteilhaft sein, auf die Abtriebswelle benachbart zum Verbindungsabschnitt zum Übertragungsgestänge ein Gewinde zur Aufnahme einer Mutter aufzubringen. Die aufgeschraubte Mutter sichert das Bauteil des Übertragungsgestänges in seiner axialen Position auf der Abtriebswelle. Eine derartige axiale Sicherung ist aber auch beispielsweise durch das Erzeugen eines axialen Anschlags an der Abtriebswelle möglich, der zum Beispiel durch Umformen im Wege des Taumelnietens erzeugt wird. In Betracht kommt des Weiteren eine Durchmesserreduzierung des umgreifenden Bauteils des Übertragungsgestänges im Wege des Ringverstemmens, um eine verbesserte Drehsicherung sowie eine axiale Sicherung des Bauteils an der Abtriebswelle zu erreichen.

Weitere Vorteile und zweckmäßige Ausführungen sind den weiteren Ansprüchen, der Figurenbeschreibung und den Zeichnungen zu entnehmen. Es zeigen:
- Fig. 1: in schematischer Darstellung eine Scheibenwischvorrichtung für ein Fahrzeug, mit einer Antriebseinrichtung, die eine Antriebseinheit mit einem elektrischen Antriebsmotor und einem Getriebe umfasst, über das eine Abtriebswelle angetrieben wird, auf der ein erster Wischarm aufsitzt, sowie mit einem Übertragungsgestänge zum Antreiben eines zweiten Wischarms,
- Fig. 2: die Antriebseinrichtung mit der Abtriebswelle, welche im Bereich ihrer freien Stirnseite einen ersten, konusförmigen Verbindungsabschnitt und axial beabstandet hierzu einen zweiten, konusförmigen Verbindungsabschnitt aufweist,
- Fig. 3: eine Fig. 2 entsprechende Darstellung der Antriebseinrichtung, wobei der zweite Verbindungsabschnitt zylindrisch ausgeführt ist,
- Fig. 4: die Antriebseinrichtung in einer weiteren Ausführungsvariante, bei der durch Taumelnieten auf der Mantelfläche der Abtriebswelle eine umlaufende, einen Anschlag bildende Schulter erzeugt ist,
- Fig. 5: eine Antriebseinrichtung in einer weiteren Ausführungsvariante, bei der das auf den zweiten Verbindungsabschnitt aufgesetzte Übertragungsteil durch Ringverstemmen axial und in Umfangsrichtung mit der Abtriebswelle verbunden ist.
- Fig. 6: Abtriebswelle mit Rändelung und Einstichen.

In den Figuren sind gleiche Bauteile mit gleichen Bezugszeichen versehen.

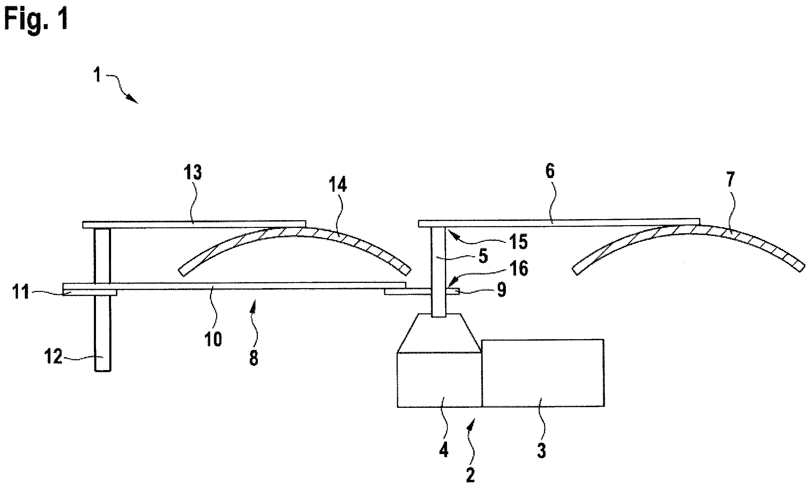

In Fig. 1 ist eine Scheibenwischvorrichtung 1 für ein Kraftfahrzeug dargestellt, mit der beispielsweise die Frontscheibe des Fahrzeugs gereinigt werden kann. Die Scheibenwischvorrichtung 1 umfasst eine Antriebseinrichtung 2 mit einer Antriebseinheit, welche aus einem elektrischen Antriebsmotor 3 und einem nachgeschalteten Getriebe 4 besteht, in welchem die rotatorische Antriebsbewegung des Antriebsmotors 3 in eine Drehpendelbewegung einer Abtriebswelle 5 umgesetzt wird, die unmittelbar von dem Getriebe 4 angetrieben wird. Im Bereich der freien Stirnseite sitzt auf der Abtriebswelle 5 ein erster Wischarm 6 auf, der Träger eines auf der Fahrzeugscheibe aufliegenden Wischblattes 7 ist.

Mit axialem Abstand zur Verbindungsstelle 15 zwischen der Abtriebswelle 5 und dem ersten Wischarm 6 ist an der Abtriebswelle eine zweite Verbindungsstelle 16 angeordnet, über die ein Übertragungsgestänge 8 angetrieben wird, welches mit einer weiteren Welle 12 gekoppelt ist, die Träger eines zweiten Wischarmes 13 mit einem Wischblatt 14 ist, das ebenfalls auf der Fahrzeugscheibe aufliegt. Das Übertragungsgestänge 8 umfasst eine Kurbel 9, eine Kurbelschwinge 10 sowie eine Schwinge 11, von denen die Kurbel 9 drehfest mit der Abtriebswelle 5 und die Schwinge 11 drehfest mit der weiteren Welle 12 verbunden ist, auf der der zweite Wischarm 13 aufsitzt. Die zwischenliegende Kurbelschwinge 10 ist gelenkig sowohl mit der Kurbel 9 als auch der Schwinge 11 gekoppelt.

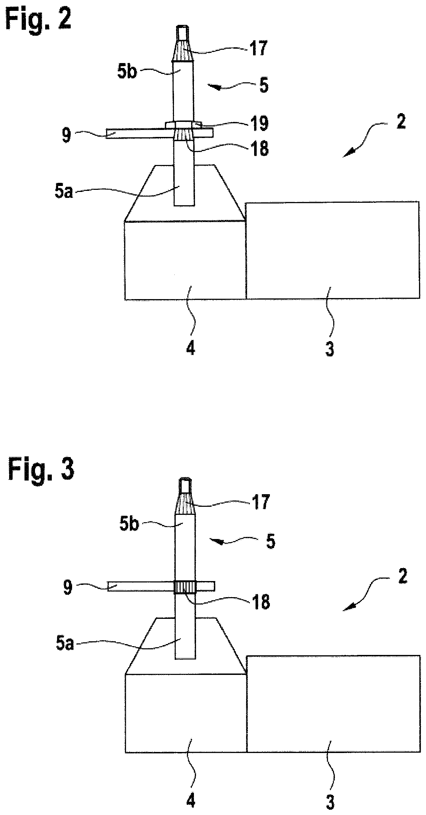

In den Fig. 2 bis 5 sind jeweils Verbindungsabschnitte 17 und 18 auf der Abtriebswelle 5, die Bestandteil der Verbindungsstellen zum Wischarm bzw. dem Übertragungsgestänge mit der Kurbel 9 sind, im Detail in verschiedenen Ausführungsvarianten dargestellt. Gemäß Fig. 2 sind beide Verbindungsabschnitte 17 und 18 benachbart zur freien Stirnseite bzw. mit axialem Abstand zur Stirnseite konusförmig ausgebildet und mit einer Riffelung bzw. Rändelung versehen, die über den Umfang verteilt eine Vielzahl von axial verlaufenden, riffelförmigen Einkerbungen aufweist. Auf die konusförmigen Verbindungsabschnitte 17 und 18 wird jeweils eine nabenförmige Ausnehmung des ersten Wischarmes 6 bzw. der Kurbel 9 aufgesetzt, wobei der Wischarm und die Kurbel drehfest mit der Abtriebswelle 5 verbunden werden. Es handelt sich somit um eine im Prinzip gleichartige Verbindung zwischen der Abtriebswelle im Bereich der Verbindungsabschnitte 17, 18 mit dem ersten Wischarm bzw. dem Bauteil des Übertragungsgestänges.

Auch die weiteren Ausführungsbeispiele gemäß den Fig. 3 bis 5 weisen gleichartige Verbindungsabschnitte 17 und 18 zur Verbindung mit dem ersten Wischarm bzw. dem Übertragungsgestänge auf. Es ist jeweils der Verbindungsabschnitt 17, 18 mit einer Riffelung bzw. Rändelung versehen für eine verbesserte drehfeste Kopplung mit dem Wischarm bzw. dem Bauteil des Übertragungsgestänges.

Wie Fig. 2 des Weiteren zu entnehmen ist, sitzt auf der Abtriebswelle 5 eine Mutter 19 auf, die auf ein Außengewinde geschraubt ist, welches in die Mantelfläche der Abtriebswelle 5 unmittelbar axial benachbart zu dem zweiten Verbindungsabschnitt 18 eingebracht ist. Die beiden Abtriebswellenabschnitte 5a und 5b, welche sich auf unterschiedlichen Seiten an den zweiten, konusförmigen Verbindungsabschnitten 18 anschließen, besitzen einen unterschiedlich großen Durchmesser, wobei der der freien Stirnseite benachbarte Abtriebswellenabschnitt 5b einen kleineren Durchmesser aufweist als der Abtriebswellenabschnitt 5a. Somit besitzt der konusförmige zweite Verbindungsabschnitt 18 auf der dem Abtriebswellenabschnitt 5a zugewandten Seite einen größeren Durchmesser als auf der dem Abtriebswellenabschnitt 5b zugewandten Seite.

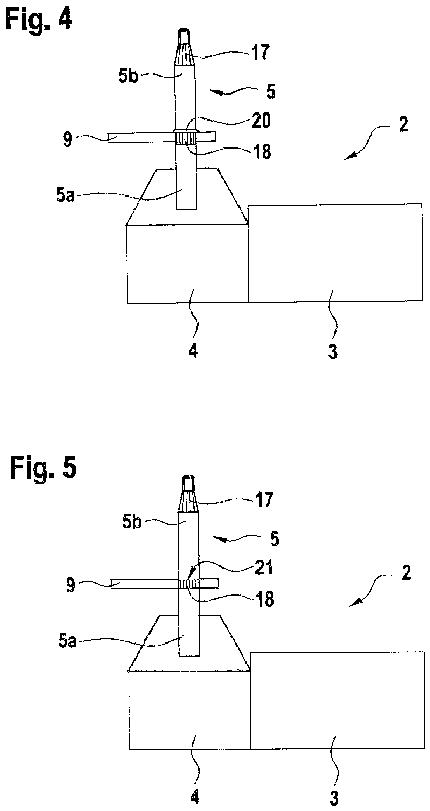

Auch in den weiteren Ausführungsbeispielen gemäß den Fig. 3 bis 5 besitzt die Abtriebswelle 5 zwei zylindrische Abtriebswellenabschnitte 5a, 5b mit unterschiedlich großem Durchmesser, von denen der Abtriebswellenabschnitt 5a auf der der freien Stirnseite abgewandten Seite den größeren Durchmesser aufweist. Gemäß Fig. 3 ist der erste, stirnseitige Verbindungsabschnitt 17 konusförmig und der zweite, axial hierzu beabstandete Verbindungsabschnitt 18 zylindrisch ausgebildet. Aufgrund des größeren Durchmessers des Abtriebswellenabschnittes 5a bildet der Übergang zwischen dem Verbindungsabschnitt 18 zum Abtriebswellenabschnitt 5a eine radial vergrößerte Ringschulter, die einen Anschlag für die Kurbel 9 bildet. Die Kurbel 9 kann somit axial über die freie Stirnseite der Abtriebswelle 5 aufgeschoben werden bis zum Erreichen des zweiten Verbindungsabschnittes 18 und der Ringschulter am Übergang des zweiten Verbindungsabschnittes 18 zum Abtriebswellenabschnitt 5a.
Auch in den Fig. 4 und 5 weist die Abtriebswelle 5 einen konusförmigen ersten Verbindungsabschnitt 17 und einen zylindrischen, zweiten Verbindungsabschnitt 18 auf. Gemäß Fig. 4 ist die Abtriebswelle 5 an der oberen Seite des zweiten Verbindungsabschnittes 18 im Bereich ihrer Mantelfläche verformt, wodurch sich ein radial geringfügig erweiterter Anschlag 20 ergibt, der die Kurbel 9 axial in ihrer Position sichert. Die Verformung wird beispielsweise im Wege des Taumelnietens erzeugt. Die Kurbel 9 ist somit axial nach unten durch den größeren Durchmesser des Abtriebswellenabschnittes 5a und axial nach oben durch den verformten Anschlag 20 in ihrer axialen Position gehalten.
In Fig. 5 ist die Kurbel 9 im Bereich der nabenförmigen Ausnehmung im Wege des Ringverstemmens am oberen axialen Rand wie mit Bezugszeichen 21 gekennzeichnet verformt, wodurch sich eine axiale Sicherung der Kurbel 9 axial nach oben ergibt. Gegebenenfalls kann auch der axial unten liegende Rand an der Kurbel 9 ringverstemmt sein.

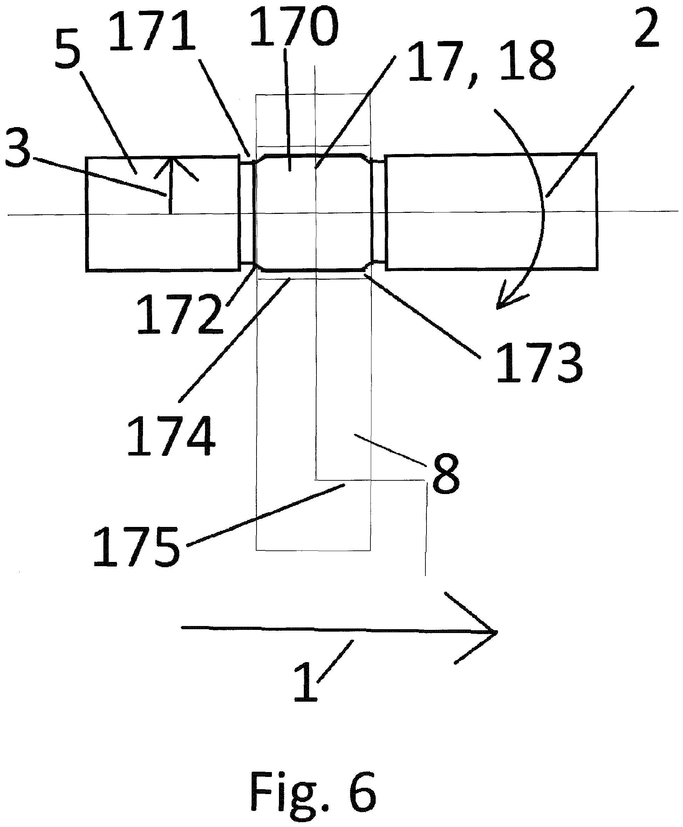

In Figur 6 ist die Antriebseinrichtung gezeigt. Die Antriebseinrichtung ist für eine Scheibenwischvorrichtung 1, mit einer einen elektrischen Antriebsmotor 3 und ein Getriebe 4 umfassenden Antriebseinheit mit einer Abtriebswelle 5, die Träger eines ersten Wischarms 6 ist, und mit einem Übertragungsgestänge 8 zum Antreiben eines zweiten Wischarms 13, wobei auf der Abtriebswelle 5 axial beabstandet eine erste und eine zweite Verbindungsstelle 15, 16 zum ersten Wischarm 6 bzw. zum Übertragungsgestänge 8 angeordnet ist, dadurch gekennzeichnet, dass die Verbindungsstellen 15, 16 als Welle-Nabe-Verbindungen ausgeführt sind, wobei auf der Abtriebswelle 5 im Bereich der Verbindungsstellen 15, 16 jeweils ein Verbindungsabschnitt 17, 18 angeordnet ist, auf dem eine Nabe des ersten Wischarms 6 bzw. eines Bauteils des Übertragungsgestänges 8 kraft- oder formschlüssig aufsitzt, wobei der Verbindungsabschnitt 18 gerändelt ist, und der Verbindungsabschnitt 18 in eine glattwandige Bohrung (173) des Übertragungsgestänges 8 gepresst ist, sodass die glatte Wandung der Bohrung 173 entsprechend der Rändelung 170 verformt ist. Das Übertragungsgestänge 8 weist dabei eine Bohrung 173 auf, welche eine Durchgangsbohrung darstellt. Diese Bohrung 173 weist eine zylindrische Wandung auf, die im Wesentlichen glatt ist. Auf diese Weise wird eine besonders feste Verbindung zwischen Übertragungsgestänge und Abtriebswelle erreicht, da das Material des Übertragungsgestänges durch den Pressprozess gequetscht wird, und in die Rändelung 170 hineinfließt. Dadurch wird eine sowohl kraftschlüssige als auch formschlüssige Verbindung erreicht.

Die Antriebseinrichtung ist an den Verbindungsabschnitten 17, 18 gerändelt. Dabei kann ein Einstich 171 in Axialrichtung 1 vor und/oder hinter den Verbindungsabschnitten 17, 18 angeordnet ist.

Durch den Einstich 171 an dem Endabschnitt der Rändelung 170 ist eine Schräge 172 bezüglich der Axialrichtung 1 ausgebildet, die sich in Umfangsrichtung 2 erstreckt. Der Einstich 171 bewirkt, dass der Rand der Rändelung 170 bezüglich der Radialrichtung 3 abgeflacht wird. Dadurch entsteht eine Art Fase am axialen Rand der Rändelung 170, sodass die Pressung in die Bohrung 173 besser erfolgen kann.

Dabei kann das Übertragungsgestänge 8 gekröpft sein. Die Kröpfung 175 erfolgt in Axialrichtung 1, sodass die Bohrung 174 und ein Teil des Übertragungsgestänges 8 in unterschiedlichen Ebenen bezüglich der Axialrichtung 1 angeordnet sind.

Es ist auch denkbar, dass die Bohrung 174 ein Mehrkantprofil aufweist. Es ist möglich das es sich um ein Drei, Vier, Fünf, Sechs, Sieben, Acht oder Polygonprofil handelt. Dabei weist der Verbindungsabschnitt 17, 18 ein komplementäres Mehrkantprofil auf der gleichen Ordnung auf. Dabei ist Denkbar dass der Verbindungsabschnitt 17, 18 eine Rändelung 170 aufweist. Es ist auch denkbar das der Verbindungsabschnitt 17, 18 keine Rändelung 170 aufweist.

Es ist möglich das Übertragungsgestänge 8 auf dem Verbindungsabschnitt 17, 18 anzuordnen, und durch einen Laserschweißschritt anzuschweißen. Dabei kann die Schweißung sowohl auf der Oberseite als auch auf der Unterseite bezüglich der Axialrichtung 1 erfolgen.
Es ist auch denkbar das Übertragungsgestänge 8 durch eine Einsteckmutter an der Abtriebswelle 5 zu befestigen. Eine Einsteckmutter muss dabei lediglich auf die Abtriebswelle 5 aufgeschoben werden, sodass das Übertragungsgestänge 8 fixiert wird in Axialrichtung 1. Die Einsteckmutter ist dabei vorzugsweise aus Blech.

Das Übertragungsgestänge 8 wird in einem Verfahrensschritt auf die Rändelung 170 geschoben. Dabei wird das Gestänge 8 soweit aufgeschoben, bis es die Rändelung 170 überdeckt. Dadurch wird eine Presspassung zwischen Rändelung 170 und Bohrung 173 erzeugt, die dazu führt, dass das Material der Bohrung 173 verformt wird. Die Wandung 174 wird dahingehend verformt, das sie in das Profil der Rändelung 170 eindringt. Das Gestänge 8 muss dabei nicht an einem axialen Anschlag anschlagen, sondern kann soweit aufgeschoben werden, wie notwendig ist, dass das axiale Montagemaß des Gestänges 8 erreicht wird. Dieses Maß kann sich z.B. nach der Rändelung 170 Richtung, sodass bei einer maximalen Überdeckung der Rändelung 170 die maximale Festigkeit der Verbindung zwischen Rändelung 170 und Gestänge 8 durch die Pressung und Verformung erreicht ist.

## Patentansprüche

1. Antriebseinrichtung für eine Scheibenwischvorrichtung (1), mit einer einen elektrischen Antriebsmotor (3) und ein Getriebe (4) umfassenden Antriebseinheit mit einer Abtriebswelle (5), die Träger eines ersten Wischarms (6) ist, und mit einem Übertragungsgestänge (8) zum Antreiben eines zweiten Wischarms (13), wobei auf der Abtriebswelle (5) axial beabstandet eine erste und eine zweite Verbindungsstelle (15, 16) zum ersten Wischarm (6) bzw. zum Übertragungsgestänge (8) angeordnet ist, **dadurch gekennzeichnet, dass** die Verbindungsstellen (15, 16) als Welle-Nabe-Verbindungen ausgeführt sind, wobei auf der Abtriebswelle (5) im Bereich der Verbindungsstellen (15, 16) jeweils ein Verbindungsabschnitt (17, 18) angeordnet ist, auf dem eine Nabe des ersten Wischarms (6) bzw. eines Bauteils des Übertragungsgestänges (8) kraft- oder formschlüssig aufsitzt, wobei der Verbindungsabschnitt (18) des Übertragungsgestänges (8) gerändelt ist, und der Verbindungsabschnitt (18) des Übertragungsgestänges (8) in eine glattwandige Bohrung (173) des Bauteils des Übertragungsgestänges (8) gepresst ist, sodass die glatte Wandung (174) der Bohrung (173) entsprechend der Rändelung (170) verformt ist.

2. Antriebseinrichtung nach Anspruch 1, **dadurch gekennzeichnet, dass** die Verbindungsabschnitte (17, 18) gerändelt sind, und das vor und/oder hinter den Verbindungsabschnitten (17, 18) ein Einstich (171) angeordnet ist.

3. Antriebseinrichtung nach Anspruch 1 oder 2, **dadurch gekennzeichnet**, sodass die Endabschnitte der Rändelungen (170) eine Schräge (172) bezüglich der Axialrichtung (1) aufweisen, die sich in Umfangsrichtung (2) erstreckt.

4. Antriebseinrichtung nach einem der Ansprüche 1 bis 3, **dadurch gekennzeichnet, dass** das Übertragungsgestänge (8) gekröpft ist.

5. Antriebseinrichtung nach Anspruch 2, **dadurch gekennzeichnet, dass** die Abtriebswelle (5) unmittelbar nach dem Einstich (171) im Wesentlichen den gleichen Durchmesser aufweist, wie die Rändelung (170), sodass kein Anschlag für das Übertragungsgestänge (8) ausgebildet ist.

6. Antriebseinrichtung nach einem der vorherigen Ansprüche, **dadurch gekennzeichnet, dass** das Übertragungsgestänge (8) auf der Abtriebswelle (5) keine axiale Kontaktfläche mit der Abtriebswelle (5) aufweist.

7. Antriebseinrichtung nach einem der vorherigen Ansprüche, **dadurch gekennzeichnet, dass** die Bohrung (173) ein Mehrkantprofil aufweist, insbesondere ein Dreikant- oder Vierkant- oder Fünfkant- oder Sechskantprofil.

8. Antriebseinrichtung nach einem der vorherigen Ansprüche, **dadurch gekennzeichnet, dass** das Übertragungsgestänge (8) durch Laserschweisen an der Abtriebswelle (5) befestigt ist.

9. Antriebseinrichtung nach einem der vorherigen Ansprüche, **dadurch gekennzeichnet, dass** das Übertragungsgestänge (8) durch eine Einsteckmutter an der Abtriebswelle (5) befestigt ist.

10. Antriebseinrichtung nach einem der vorherigen Ansprüche, **dadurch gekennzeichnet, dass** das Übertragungsgestänge (8) soweit auf den Verbindungsabschnitt (17, 18) aufgeschoben wird, dass dieser eine maximale Überdeckung mit der Wandung (174) aufweist, wobei das Übertragungsgestänge (8) nicht an einem axialen Anschlag anstößt.

## Claims

1. Drive device for a windscreen wiper apparatus (1), with a drive unit which comprises an electric drive motor (3) and a gearing (4) and has an output shaft (5) which is a carrier of a first wiper arm (6), and with a transmission linkage (8) for driving a second wiper arm (13), wherein a first and a second connecting point (15, 16) to the first wiper arm (6) and to the transmission linkage (8), respectively, are arranged axially spaced apart on the output shaft (5), **characterized in that** the connecting points (15, 16) are designed as shaft-hub connections, wherein a connecting portion (17, 18) is in each case arranged on the output shaft (5) in the region of the connecting points (15, 16), on which connecting portion a hub of the first wiper arm (6) or a component of the transmission linkage (8) sits in a non-positive-locking or positive-locking manner, wherein the connecting portion (18) of the transmission linkage (8) is knurled, and the connecting portion (18) of the transmission linkage (8) is pressed into a smooth-walled bore (173) in the component of the transmission linkage (8), and therefore the smooth wall (174) of the bore (173) is deformed in accordance with the knurling (170).

2. Drive device according to Claim 1, **characterized in that** the connecting portions (17, 18) are knurled, and **in that** a recess (171) is arranged upstream and/or downstream of the connecting portions (17, 18).

3. Drive device according to Claim 1 or 2, **characterized in that** the end portions of the knurlings (170) have a slope (172) with respect to the axial direction (1), the slope extending in the circumferential direction (2).

4. Drive device according to one of Claims 1 to 3, **characterized in that** the transmission linkage (8) is cranked.

5. Drive device according to Claim 2, **characterized in that** the output shaft (5) directly downstream of the recess (171) has substantially the same diameter as the knurling (170), and therefore no stop is formed for the transmission linkage (8).

6. Drive device according to one of the preceding claims, **characterized in that**, on the output shaft (5), the transmission linkage (8) does not have an axial contact surface with the output shaft (5).

7. Drive device according to one of the preceding claims, **characterized in that** the bore (173) has a polygonal profile, in particular a triangular or square or pentagonal or hexagonal profile.

8. Drive device according to one of the preceding claims, **characterized in that** the transmission linkage (8) is fastened to the output shaft (5) by laser welding.

9. Drive device according to one of the preceding claims, **characterized in that** the transmission linkage (8) is fastened to the output shaft (5) by a plug-in nut.

10. Drive device according to one of the preceding claims, **characterized in that** the transmission linkage (8) is pushed onto the connecting portion (17, 18) to an extent such that the latter has a maximum overlap with the wall (174), wherein the transmission linkage (8) does not butt against an axial stop.

## Revendications

1. Système d'entraînement pour un dispositif d'essuie-glace (1), comprenant une unité d'entraînement comprenant un moteur d'entraînement électrique (3) et une transmission (4), avec un arbre de prise de force (5) qui constitue le support d'un premier bras d'essuie-glace (6), et avec une tringlerie de transmission (8) pour l'entraînement d'un deuxième bras d'essuie-glace (13), un premier et un deuxième point de liaison (15, 16) pour un premier bras d'essuie-glace (6) ou pour la tringlerie de transmission (8) étant disposés sur l'arbre de prise de force (5) de manière espacée axialement, **caractérisé en ce que** les points de liaison (15, 16) sont réalisés sous forme de connexions arbre-moyeu, une portion de liaison (17, 18) étant à chaque fois disposée sur l'arbre de prise de force (5) dans la région des points de liaison (15, 16), sur laquelle un moyeu du premier bras d'essuie-glace (6) ou d'un composant de la tringlerie de transmission (8) repose par engagement par force et/ou par correspondance de formes, la portion de liaison (18) de la tringlerie de transmission (8) étant moletée et la portion de liaison (18) de la tringlerie de transmission (8) étant pressée dans un alésage à paroi lisse (173) du composant de la tringlerie de transmission (8) de telle sorte que la paroi lisse (174) de l'alésage (173) soit déformée de manière correspondant au moletage (170).

2. Système d'entraînement selon la revendication 1, **caractérisé en ce que** les portions de liaison (17, 18) sont moletées et **en ce qu'**une entaille (171) est disposée avant et/ou après les portions de liaison (17, 18) .

3. Système d'entraînement selon la revendication 1 ou 2, **caractérisé en ce que** les portions d'extrémité des moletages (170) présentent un biseautage (172) par rapport à la direction axiale (1), lequel s'étend dans la direction périphérique (2).

4. Système d'entraînement selon l'une quelconque des revendications 1 à 3, **caractérisé en ce que** la tringlerie de transmission (8) est coudée.

5. Système d'entraînement selon la revendication 2, **caractérisé en ce que** l'arbre de prise de force (5) présente essentiellement le même diamètre directement après l'entaille (171) que le moletage (170) de telle sorte qu'aucune butée ne soit réalisée pour la tringlerie de transmission (8).

6. Système d'entraînement selon l'une quelconque des revendications précédentes, **caractérisé en ce que** la tringlerie de transmission (8) sur l'arbre de prise de force (5) ne présente pas de surface de contact axiale avec l'arbre de prise de force (5).

7. Système d'entraînement selon l'une quelconque des revendications précédentes, **caractérisé en ce que** l'alésage (173) présente un profil polygonal, en particulier un profil à trois pans, ou à quatre pans ou à cinq pans ou à six pans.

8. Système d'entraînement selon l'une quelconque des revendications précédentes, **caractérisé en ce que** la tringlerie de transmission (8) est fixée par soudage laser à l'arbre de prise de force (5).

9. Système d'entraînement selon l'une quelconque des revendications précédentes, **caractérisé en ce que** la tringlerie de transmission (8) est fixée à l'arbre de prise de force (5) par un écrou d'enfichage.

10. Système d'entraînement selon l'une quelconque des revendications précédentes, **caractérisé en ce que** la tringlerie de transmission (8) est enfoncée sur la portion de liaison (17, 18) dans une mesure telle que celle-ci présente un chevauchement maximum avec la paroi (174), la tringlerie de transmission (8) ne butant pas contre une butée axiale.
